# EUROPEAN PATENT SPECIFICATION

(11) **EP 2 272 374 B1**
(45) Date of publication and mention of the grant of the patent: **14.01.2015**
(21) Application number: 09163435.2
(22) Date of filing: 23.06.2009
(51) Int. Cl.: A23C 1/04, A23C 1/16, A23C 9/12, A23C 9/154, A23C 21/02, A23C 9/16, A23C 1/00

(54) **Lactase containing milk powder**
Lactasehaltiges Milchpulver
Poudre de lait contenant de la lactase

(43) Date of publication of application: 12.01.2011
(73) Proprietor: Nestec S.A., 1800 Vevey (CH)
(72) Inventor: Niederreiter, Caroline, 3510 Konolfingen (CH); Braun, Marcel, 3510 Konolfingen (CH)
(74) Representative: Rupp, Christian

(56) References cited:
- EP-A- 0 458 358
- BURIN L ET AL: "Thermal resistance of beta -galactosidase in dehydrated dairy model systems as affected by physical and chemical changes." FOOD CHEMISTRY, vol. 76, no. 4, 2002, pages 423-430, XP002539394 DEP. DE IND., FAC. DE CIENCIAS EXACTAS Y NATURALES, BUENOS AIRES, ARGENTINA. TEL. +54-11-4794-3344. FAX +54-11-4576-3366. E-MAIL PILAR(A)DI.FCEN.UBA.AR
- PALUMBO M S ET AL: "Stability of beta-galactosidase from Aspergillus oryzae and Kluyveromyces lactis in dry milk powders" JOURNAL OF FOOD SCIENCE, vol. 60, no. 1, 1995, pages 117-119, XP002539395 ISSN: 0022-1147

## Description

### Field of the invention

The present invention relates to milk powder compositions comprising lactase and to processes for the manufacture of said milk powder compositions. The processes have been found to stabilise lactase in said milk powder compositions. It further relates to the use of said milk powder compositions in alleviating the symptoms of gastrointestinal intolerance in mammals.

### Background of the invention

Milk-based formulas typically contain lactose which can lead to digestive problems for lactose intolerant persons. To overcome this problem, lactose is enzymatically hydrolysed by lactase.

There are three traditional ways in which lactose is hydrolysed in milk powders. In a first way, the milk powder is reconstituted with water and lactase is added at a defined time prior to consumption. This method requires manual dosing and handling of lactase and is therefore prone to dosing errors and handling problems and therefore not optimal for the consumer.

In a second process, lactose in milk is partially or completely hydrolysed by lactase treatment before drying the milk to produce a milk powder composition. In this process, lactose is hydrolysed to equal amounts of glucose and galactose. These monosaccharides however lead to strongly increased browning-reactions (e.g. Maillard reactions) upon storage at normal or elevated temperatures and consequently to browning of the compositions, flavour change and reduction in nutritional value. Therefore, the storage stability of these powders is seriously affected.

The resulting powder also suffers from caking issues, taste deterioration due to Maillard reactions and browning.

A third process known to reduce these problems is the addition of active lactase to milk powder as a dry mix. However, there are problems of de-mixing by vibrations during manufacturing and storage, resulting in inhomogeneous distribution of lactase activity in milk powder and consequently variation in lactose hydrolysis efficiency upon reconstitution. Another problem of this process is the reduction of lactase activity during storage, especially at elevated temperatures.

Depending on the type of lactase, further problems include inactivation of lactase in the strongly acidic environment of the stomach.

To solve the problem of loss of lactase activity in the stomach, US 5,902,617 describes a formula which contains an enzyme which is in a form stable to storage, typically by providing an enteric coating to said enzyme. The enzyme is then activated upon digestion.

WO00/13526 also describes a pet milk powder comprising milk powder and a lactase. The stability issue is however not mentioned.

Lactase enzymes used essentially for the purpose of hydrolysing lactose have been described in the prior art.

For example, WO02/081673 relates to a purified lactase solution which can be used in the production of pasteurised, lactose-reduced milk.

Lactases of different types and having different activity pH optima are described in US 6,562,339 and are suitable for addition to dairy products for lactose-intolerant individuals.

Lactase enzymes compositions with enhanced shelf-stability are described in EP 1 208 848. The compositions are said to contain less than 10 wt% of a reducing sugar.

US2001/0022986 is concerned with the provision of a sports drink which is based on a dairy permeate having a very low amount of milk protein and which may also be treated with a lactase enzyme to break down lactose and render it suitable for lactose-intolerant individuals.

A further problem which occurs in lactose-hydrolysed milk products is the generation of poor taste. A few publications have attempted to solve this problem.

For example, US 4,853,246 describes a reduced lactose milk product which has good tasting properties. The enhanced tasting properties are said to be due to a combination of added milk solids and lactase.

WO2007/060247 proposes to solve the problem of off-flavours in lactose-hydrolysed UHT milk by treating dairy products with a lactase having reduced amount of arylsulfatase.

Burin L. et al., Food Chemistry, vol. 76, no. 4, 2002, pages 423-430 discloses a study with the objective to learn about the remaining activity of the enzyme β-galactosidase in dehydrated dairy systems and its relationship with simultaneous chemical (i.e. non-enzymatic browning, NEB) and physical changes (structural collapse) at temperatures from 70 to 105°C. For the study, systems were prepared containing different proportions of milk components without specifying the exact value of these proportions.

Palumbo M. S. et al., Journal of Food Science, vol. 60, no. 1, 1995, pages 117-119 discloses a process in which concentrated raw skim milk is further spray-dried at 88.9-90.6 °C (outlet temperature) to yield a milk powder with a moisture content < 3%. Enzymes were dry-blended into this milk powder and the product was immediately sealed into cans under nitrogen

EP-A-0458358 discloses a process in which skim milk is concentrated and β-galactosidase is added thereto. The resulting mixture is subjected to an enzymatic reaction at 40 °C for two hours. Thereafter, the reaction mixture is heated at 85 °C for 5 minutes using a plate type heat exchanger having a holding tube, to terminate the enzymatic reaction. Finally, the resulting reaction mixture is powderized using a vertical type spray dryer.

Many of these applications are focused on the reduction of enzymatic side activities of the lactase preparation which can create off-tastes like bitterness due to e.g. proteolysis.

The off-flavours formed due to storage of lactose hydrolyzed milk powders at elevated temperatures has hitherto not been addressed. However it is very common, in tropical countries in particular, to have high storage temperatures during transportation and storage of milk powders. Although the storage times at high temperature exposure are relatively short, product browning and taste deviation are very significant.

There is therefore a need to address the drawbacks of current lactose-hydrolysed formulations and in particular the address the issue of stability to storage.

### Object of the invention

The object of the invention is therefore to provide milk powders comprising lactase which are storage stable.

### Summary of the invention

This object is solved by means of the independent claims. The dependent claims further develop the central idea of the invention.

Thus, in a first aspect the invention relates to a process for the manufacture of a milk powder composition comprising 5-70 % lactose and lactase comprising the steps of
a. adding a lactase to a milk composition in the presence of water to form a mixture and
b. drying the mixture to form said milk powder composition, wherein the drying step occurs within 0.1-60 minutes from the addition of the lactase to the milk composition, and wherein the temperature of the process steps is at most 75 °C.

In a second aspect, the invention provides a process for the manufacture of a milk powder composition comprising 5-70 % lactose and lactase comprising the step of spray-drying a solution of lactase onto a milk powder to yield said milk powder composition.

A milk powder obtainable by any of the processes of the invention is also part thereof.

The invention also pertains to the use of a process according to any of claims 1 to 6 for stabilising lactase in a milk powder composition.

Finally, an aspect of the invention is concerned with a spray-dried milk powder composition according to claims 8 to 9, for alleviating the symptoms of lactose intolerance in mammals.

### Brief description of the figures

Figure 1 shows the browning occurring upon storage for 1 week at 55°C, 2 weeks at 55°C, 1 week at 65°C and 2 weeks at 65°C for powders produced by processes of the invention (top row) compared to powders produced by dry mixing milk powder and lactase enzyme powder (bottom row).
Figure 2 compares the lactase storage stability in powders produced by processes of the invention (wet mix) compared to powders produced by dry mixing milk powder and lactase enzyme powder (dry mix) upon 2 weeks storage at 55°C and 1 week storage at 65°C.

### Detailed description

The invention relates to processes for the manufacture of a milk powder composition comprising 5-70% lactose and lactase. The amount of lactose may be between 10-60%, preferably between 15-55%.

In a first aspect, the process comprises a first step of mixing a lactase with a milk composition in the presence of water. By "in the presence of water" is meant that water may be present as part of the lactase, as for example in a lactase solution and/or as part of the milk composition, or may be added to a dried lactase and milk composition for example.

Thus, the lactase may be an aqueous solution or may be in the form of a dried powder.

Similarly, the milk composition may be selected from liquid compositions or dried compositions. Preferably, the milk composition is selected from low-fat milk, whole milk, reconstituted milk, milk powder, milk powders with maltodextrin and/or vegetable fats, whey powders, whey fractions, buttermilk powders, fermented milk powders, dietary or nutritional formulas containing lactose, cream powders, dairy creamers with vegetable fat and/or milk fat, health care or clinical care formulas containing lactose or any mixtures thereof.

If the lactase and the milk composition are in dried form, water is then added to form the mixture.

Preferably, the amount of water in the mixture is 30-95%, more preferably 40-70%.

The term "lactase" as used in the present invention may refer to one particular lactase enzyme or a mixture of different lactase enzymes.

The lactase is preferably selected from *Aspergillus oryzae Aspergillus niger, Bacillus spp., Escherichia coli, Saccharomyces fragilis, Saccharomyces lactis, Kluyveromyces spp.* lactase or any mixtures thereof. More preferably, the lactase is selected from *Aspergillus oryzae* lactase or *Aspergillus niger* lactase. The lactase preferably has an activity of more than 10000 units/g at optimum pH. Such enzymes are available commercially under the name "Lactase Amano" (Amano Enzyme Europe Limited, Chipping Norton, Oxfordshire, OX7 5SR, U.K.).

The lactase enzyme used in the present invention preferably has enzymatic activities in the acidic or the neutral pH range. When a mixture of enzymes is used, a broad range of pH activity can be achieved.

In the present invention, the enzyme is preferably not encapsulated. Thus, it is preferably present in an active form in the milk powder compositions of the invention.

The amount of lactase to be mixed with the milk composition can easily be calculated by a skilled person. It is selected to ensure complete hydrolysis of lactose to glucose and galactose. Typically, the amount of lactase present in the milk composition is 0.001-4 wt%, preferably it is 0.01-2 wt%, more preferably it is 0.05-0.5 wt% (based on dry weight). This corresponds to a more preferred lactase activity of 500 - 5000 IU/100g powder.

The mixture formed by the lactase and the milk composition in the presence of water is then dried. Drying is carried out by spray-drying.

The drying step is carried out within 0.1-120 minutes, preferably within 0.1-60 minutes, more preferably within 1 to 30 minutes from mixing the lactase with a milk composition in the presence of water.

This time duration between the mixing and the drying is important to ensure that the hydrolysis of lactose present in the milk composition does not occur or is considerably minimised. Indeed, if lactose is hydrolysed prior to drying, several issues which hinder the drying process and which produce poor quality products ensue.

The drying step then yields the milk powder composition of the invention. Preferably, the milk powder composition has a water content of 1-9%, more preferably 2-7%, even more preferably less than 5%. In an embodiment, the water content is less than 5% for non-fat powders. By non-fat powders are meant powders having a fat content of less than 2%. In another embodiment, the water content is less than 4% for full fat powders. By full fat powders are meant powders having a fat content greater than 5%, preferably greater than 10%.

The lactase solution may be an aqueous solution comprising a lactase enzyme or a mixture of lactase enzymes as described above.

In this process of the invention, there is no interaction of the lactase enzyme solution with the milk composition prior to drying such that no unwanted hydrolysis reaction can occur.

In a further process of the invention for the manufacture of a milk powder composition comprising 5-70% lactose and lactase, a solution of lactase is spray-dried onto a milk powder to yield said milk powder composition.

In this process, the lactase solution may be an aqueous solution comprising a lactase enzyme or a mixture of lactase enzymes as described above.

Again, in this process, early hydrolysis of the lactose is prevented since the lactase and the milk powder eventually interact in a dried state.

The processes of the invention are carried out at a temperature of at most 75°C, preferably at most 70°C. This has the advantage of preventing inactivation of the lactase enzyme.

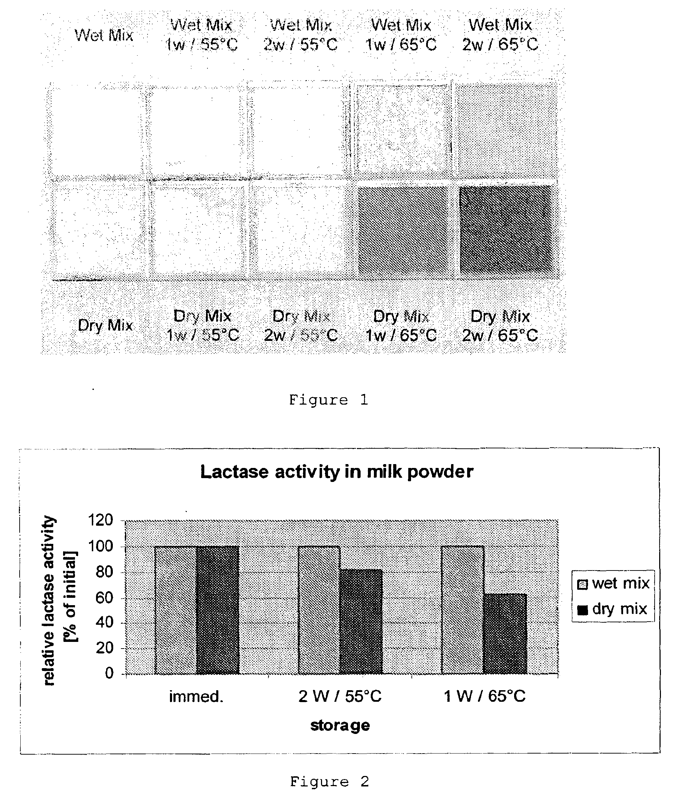

It has been found that by using these processes, the lactase activity remains excellent upon storage. Referring to figure 2, it can be seen that the milk powders produced by processes according to the invention (wet mix) have much better lactase activity stability compared to milk powders produced by a process of dry mixing milk powder and lactase enzyme powders (dry mix).

Referring to figure 1, it can also be seen that the issue of browning upon storage is considerably reduced in the products produced by the processes of the present invention (wet mix) compared to the process of dry mixing milk powder and lactase enzyme powders (dry mix).

The milk powder compositions obtainable by the processes of the invention are also part of the invention. They comprise lactose in an amount of 5-70% and lactase. The amount of lactose may be between 10-60%, preferably between 15-55%. The amount of lactose is substantially unchanged compared to the amount in the initial milk composition. Thus, essentially no hydrolysis of the lactose to glucose or galactose is allowed to occur.

The amount of lactase in the milk powder is 0.001-4 wt%, preferably 0.01-2 wt%, more preferably 0.05 to 0.5 wt% based on dry weight.

Furthermore, the lactase in the milk powder composition is in an active form. However, since the milk powder composition has a water content of 1-9%, preferably less than 5%, the lactase acts on the lactose substrate only once the milk powder composition has been reconstituted. This presents the advantage that the lactose hydrolysis occurs *in situ* upon reconstitution and/or during consumption.

Compared to lactose hydrolysed products, the milk powder compositions resulting from the processes of the invention offer considerable improvements in terms of reduction of nutritional losses, such as lysine losses, or degradation of protein which occur during production and storage of lactose hydrolysed products.

Another advantage over enterically coated enzymes for example is the fact that the hydrolysis occurs immediately upon reconstitution and is not delayed by the initial digestion of the coating prior to releasing the enzyme and allowing it to interact with the lactose substrate.

The processes of the invention have been found to have an effect on the stability of the lactase enzyme. Thus, the use of these processes for stabilising lactase in a milk powder composition also forms part of the invention.

By stabilising the lactase in the composition, a more efficient hydrolysis of lactose upon reconstitution can occur. Additionally, the milk powder composition does not suffer from caking upon storage. Caking has indeed been found to occur more rapidly at the same product moisture in products containing hydrolysed lactose compared to non-hydrolysed products containing lactase. Furthermore, the issues of browning upon storage are avoided due to the stabilised lactase (cf. comparative figure 1).

According to a further aspect, the invention relates to milk powder composition comprising lactose and lactase, wherein the lactase is physically associated with the milk powder particles.

By "physically associated" is meant that the lactase is incorporated into the product matrix. Without wishing to be bound by theory, it is thought that the incorporation of lactase into the product matrix is a consequence of the processes of the invention which make use of a wet or semi-wet lactase composition. It is suspected that it is this tight interaction between the lactase enzyme and the milk powder particles which stabilises the lactase, thus making the milk powder compositions of the invention more amenable to storage. The tight association also allows for an efficient hydrolysis upon reconstitution of the milk powder composition in a liquid. Figure 2 shows residual lactase activities after storage at elevated temperatures comparing lactase incorporation with dry mix or wet mix technique. It clearly shows the superiority of the wet mix compared to the dry mix.

The milk powder compositions preferably comprise lactose in an amount of 5-70%. The amount of lactose may be between 10-60%, preferably between 15-55%. The amount of lactase is preferably 0.001-4 wt%, preferably it is 0.01-2 wt%, more preferably it is 0.05-0.5 wt% (based on dry weight) of the milk powder composition.

The present milk powder compositions may comprise further ingredients such as protein sources, fat sources, carbohydrate sources, colourings, minerals, vitamins, probiotics, prebiotics, active ingredients for health benefits, cosmetic nutritional supplements etc.

The milk powder compositions of the invention may be reconstituted with any liquid selected from water, juices, milk. They may indeed be used in the manufacture of dairy products such as ice cream, yogurt, milk shake, milk drinks, coffee-milk mixes, desserts etc.

The use of the milk powder compositions of the invention for alleviating the symptoms of lactose intolerance in mammals is also part of the invention. By "lactose intolerance" is not only meant a proven clinical lactose intolerance, but also a lower capacity for digesting lactose which can be caused by a number of factors such as disease, age etc. Preferably, the mammals are humans. Thus, the milk powder compositions can be used as a substitute for milk or milk-based beverages or food compositions in lactose-intolerant mammals.

The present invention is further illustrated by means of the following non-limiting examples.

### Examples

The following examples show the manufacturing processes of the invention for producing a milk powder composition.

### Example 1 (not part of the invention)

199.8 g of skim milk powder was weighed and recombined with 300 g pure water at 40-45°C for 15 minutes and then cooled to ambient temperature. 200 mg lactase (ex *Aspergillus oryzae,* min. 95000 U/g, Enzyme Development Corporation, New York, USA) and mixed well. The mix was immediately spray dried with a Buchi Mini Spray Dryer B-290 (parameters: Inlet Temp = 145°C, Outlet Temp - 72-75°C, Pump Speed = 23-26%, Aspirator = 80%, Vacuum - -52 mbar).

### Example 2 (not part of the invention)

500 g of full milk concentrate (at 50% dry matter) and 1.25 g lactase dissolved in 10g water are separately prepared for spray drying. The two spraying compartments proportionally dosing the two streams are filled with the milk concentrate and the lactase solution respectively and the powder is dried in the spray dryer.

### Example 3

Similar to example 2, the lactase solution is sprayed to the full milk spray-dried powder in the after dryer (drying equipment located after the spray drying tower).

## Claims

1. Process for the manufacture of a milk powder composition comprising 5-70% lactose and lactase comprising the steps of
a. mixing lactase with a milk composition in the presence of water and
b. spray-drying the mixture to form said milk powder composition, wherein the drying step occurs within 0.1 to 120 minutes from the mixing of the lactase with the milk composition in the presence of water, and
wherein the temperature during the process steps is at most 75 °C.

2. Process for the manufacture of a milk powder composition comprising 5-70% lactose and lactase comprising the step of spray-drying a lactase solution onto a milk powder to yield said milk powder composition, wherein the temperature during the process steps is at most 75 °C.

3. Process according to any of claims 1 to 2, wherein the lactase is selected from *Aspergillus oryzae, Aspergillus niger, Bacillus spp., Escherichia coli, Saccharomyces fragilis, Saccharomyces lactis, Kluyveromyces spp.* lactase or any mixtures thereof.

4. Process according to any of claims 1 to 3, wherein the milk composition is selected from low-fat milk, whole milk, reconstituted milk, milk powders with maltodextrin and/or vegetable fats, whey powders, whey fractions, buttermilk powders, fermented milk powders, dietary or nutritional formulas containing lactose, cream powders, dairy creamers with vegetable fat and/or milk fat, health care or clinical care formulas containing lactose or any mixtures thereof.

5. Process according to any of the preceding claims, wherein the milk powder composition has a water content of 1-9%, preferably 2-7%.

6. Process according to any of the preceding claims, wherein the temperature during the process steps is at most 70°C.

7. Use of a process according to any of claims 1 to 6 for stabilising lactase in a milk powder composition.

8. Spray-dried milk powder composition comprising lactose and lactase obtainable by a process according to claims 1 to 2" wherein the lactase is physically associated with the milk powder particles, for use in alleviating the symptoms of lactose intolerance in mammals.

9. Spray-dried milk powder composition according to claim 8, wherein the mammals are humans.

## Patentansprüche

1. Verfahren für die Herstellung einer Milchpulverzusammensetzung mit 5-70% Lactose und Lactase, das die folgenden Schritte aufweist:
a. Mischen von Lactase mit einer Milchzusammensetzung in Gegenwart von Wasser und
b. Sprühtrocknen der Mischung, um die Milchpulverzusammensetzung zu bilden, wobei der Trocknungsschritt innerhalb von 0,1 bis 120 Minuten ab dem Mischen der Lactase mit der Milchzusammensetzung in Gegenwart von Wasser eintritt, und
wobei die Temperatur während der Verfahrensschritte höchstens 75 °C beträgt.

2. Verfahren für die Herstellung einer Milchpulverzusammensetzung mit 5-70% Lactose und Lactase, aufweisend den Schritt der Sprühtrocknung einer Lactaselösung in einem Milchpulver, so dass sich die Milchpulverzusammensetzung ergibt, wobei die Temperatur während der Verfahrensschritte höchstens 75°C beträgt.

3. Verfahren nach einem der Ansprüche 1 bis 2, wobei die Lactase aus *Aspergillus oryzae, Aspergillus niger, Bacillus spp., Escherichia coli, Saccharomyces fragilis, Saccharomyces lactis, Kluyversomyces spp.* Lactase oder Mischungen daraus ausgewählt ist.

4. Verfahren nach einem der Ansprüche 1 bis 3, wobei die Milchzusammensetzung aus fettarmer Milch, Vollmilch, rekonstituierter Milch, Milchpulvern mit Maltodextrin und/oder Pflanzenfetten, Molkepulvern, Molkefraktionen, Buttermilchpulvern, fermentierten Milchprodukten, Lactose enthaltenden Diät- oder Nahrungsrezepturen, Sahnepulvern, Kaffeeweißem mit Pflanzenfett und/oder Milchfett, Lactose enthaltender Gesundheitsnahrung oder klinischer Nahrung oder Mischungen daraus ausgewählt ist.

5. Verfahren nach einem der vorhergehenden Ansprüche, wobei die Milchpulverzusammensetzung einen Wassergehalt von 1-9%, vorzugsweise 2-7%, besitzt.

6. Verfahren nach einem der Ansprüche, wobei die Temperatur während der Verfahrensschritte höchstens 70°C beträgt.

7. Verwendung eines Verfahrens nach einem der Ansprüche 1 bis 6 zur Stabilisierung von Lactase in einer Milchpulverzusammensetzung.

8. Sprühgetrocknete Milchpulverzusammensetzung mit Lactose und Lactase, erhältlich durch ein Verfahren nach den Ansprüchen 1 bis 2, wobei die Lactase physikalisch mit den Milchpulverpartikeln verbunden ist, zur Verwendung bei der Linderung der Symptome von Lactoseintoleranz bei Säugern.

9. Sprühgetrocknete Milchpulverzusammensetzung nach Anspruch 8, wobei die Säuger Menschen sind.

## Revendications

1. Procédé pour la fabrication d'une composition de poudre de lait comprenant 5-70% de lactose et lactase comprenant les étapes consistant à
a. mélanger de la lactase avec une composition de lait en présence d'eau et
b. sécher par pulvérisation le mélange pour former ladite composition de poudre de lait, dans lequel l'étape de séchage a lieu de 0,1 à 120 minutes à partir du mélange de la lactase avec la composition de lait en présence d'eau, et
dans lequel au cours des étapes de procédé la température est d'au plus 75°C.

2. Procédé pour la fabrication d'une composition de poudre de lait comprenant 5-70% de lactose et lactase comprenant l'étape de séchage par pulvérisation d'une solution de lactase sur une poudre de lait afin d'obtenir ladite composition de poudre de lait, dans lequel au cours des étapes de procédé la température est d'au plus 75°C.

3. Procédé selon l'une quelconque des revendications 1 à 2, dans lequel la lactase est choisie parmi *Aspergillus oryzae, Aspergillus niger, Bacillus spp., Escherichia coli, Saccharomyces fragilis, Saccharomyces lactis, Kluyveromyces spp.* lactase ou des mélanges quelconques de ceux-ci.

4. Procédé selon l'une quelconque des revendications 1 à 3, dans lequel la composition de lait est choisie parmi lait à faible teneur en matières grasses, lait entier, lait reconstitué, poudres de lait avec maltodextrine et/ou matières grasses végétales, poudres de lactosérum, fractions de lactosérum, poudres de babeurre, poudres de lait fermenté, formules diététiques ou nutritionnelles contenant du lactose, poudres de crème, colorants à café d'origine laitière avec matière grasse végétale et/ou matière grasse de lait, formules de soins de santé ou cliniques contenant du lactose ou des mélanges quelconques de ceux-ci.

5. Procédé selon l'une quelconque des revendications précédentes, dans lequel la composition de poudre de lait a une teneur en eau de 1-9%, de préférence 2-7%.

6. Procédé selon l'une quelconque des revendications précédentes, dans lequel au cours des étapes de procédé la température est d'au plus 70°C.

7. Utilisation d'un procédé selon l'une quelconque des revendications 1 à 6 pour la stabilisation de la lactase dans une composition de poudre de lait.

8. Composition de poudre de lait séchée par pulvérisation comprenant lactose et lactase susceptible d'être obtenue par un procédé selon les revendications 1 à 2, dans laquelle la lactase est physiquement associée aux particules de poudre de lait, pour une utilisation dans le soulagement des symptômes d'intolérance au lactose chez les mammifères.

9. Composition de poudre de lait séchée par pulvérisation selon la revendication 8, dans laquelle les mammifères sont des êtres humains.
